# EUROPÄISCHE PATENTSCHRIFT

(11) **EP 3 333 123 B1**
(45) Veröffentlichungstag und Bekanntmachung des Hinweises auf die Patenterteilung: **27.11.2019**
(21) Anmeldenummer: 16400058.0
(22) Anmeldetag: 09.12.2016
(51) Int. Cl.: C01B 3/38, B01D 53/14, C01B 3/50, C01B 3/52, C10J 3/00, C10K 1/00, F25J 3/04

(54) **VERFAHREN UND ANLAGE ZUR ERZEUGUNG VON SYNTHESEGAS**
METHOD AND PLANT FOR THE PRODUCTION OF SYNTHESIS GAS
PROCÉDÉ ET INSTALLATION DE PRODUCTION DE GAZ DE SYNTHÈSE

(43) Veröffentlichungstag der Anmeldung: 13.06.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Chaubet, Lucie, D-60385 Frankfurt am Main (DE); Bonne, Frédéric, 75020 Paris (FR); Bouet, Camille, 31600 Eaunes (FR); Schlichting, Holger, 65719 Hofheim (DE); Wagner, Marc, 94100 Saint Maur des Fosses (FR)
(74) Vertreter: Dropsch, Holger

(56) Entgegenhaltungen:
- EP-A1- 0 556 691
- EP-A1- 2 292 554
- EP-A2- 2 498 033
- WO-A2-2004/089499
- DE-A1-102005 046 790
- US-A1- 2010 018 216

## Beschreibung

### Gebiet der Erfindung

Die Erfindung betrifft ein Verfahren zur Erzeugung eines hauptsächlich aus Kohlenmonoxid und Wasserstoff bestehenden und von Sauergasen befreiten Synthesegases, ausgehend von einem kohlenwasserstoffhaltigen Brennstoff, sowie Luft und Dampf, wobei durch Tieftemperatur-Zerlegung Luft in einen Sauerstoff-, einen Restgas- und ein Stickstoffstrom zerlegt wird, wobei der Restgas- und der Stickstoffstrom Umgebungstemperatur und der Stickstoffstrom einen erhöhten Druck hat, wobei der kohlenwasserstoffhaltige Brennstoff bei erhöhter Temperatur und erhöhtem Druck mit dem Sauerstoffstrom und dem Dampf vermischt und in ein Synthesegas umgewandelt wird und wobei anschließend daraus, durch Tieftemperatur-Absorption in einer Absorptionskolonne mit einem flüssigen Absorptionsmittel, bei der das Absorptionsmittel mittels einer Kompressionskälteanlage gekühlt wird, Sauergas abgetrennt wird.

Die Erfindung betrifft ebenso eine Anlage zur Durchführung des Verfahrens.

### Stand der Technik

Die der Erfindung zugrunde liegenden Verfahren, kryogene Luftzerlegung, Erzeugung von Synthesegas aus einem kohlenstoffhaltigem Brennstoff und die kryogene Abtrennung von Sauergas aus dem (Roh-)Synthesegas gehören zum Stand der Technik.

Kryogene Luftzerlegung, auch Tieftemperatur-Zerlegung genannt, ist seit den 1920-ziger Jahre bekannt und grundsätzlich z.B. in Ullmann's Encyclopedia of Industrial Chemistry, 6th Edition, Vol. 10, S. 39, 40 beschrieben. Im Zusammenhang mit Synthesegasproduktion wird häufig von den bekannten Luftzerlegungsverfahren die Doppelsäulen-Rektifikation verwendet, da dabei, neben dem Sauerstoffstrom, auch ein Strom reinen Stickstoffs erzeugt wird, der häufig in der Synthesegasproduktion nachgeschalteten Anlagen verwendet werden kann. Eine Ausführungsart der Doppelsäulen-Rektifikation, die häufig für die Synthesegasproduktion verwendet wird, ist in dem Fachbuch Gasification, Second Edition, Christopher Higman, Maarten van der Burgt, Gulf Professional Publishing, Elsevier, Burlington, USA beschrieben.

Bei dieser Ausführungsart wird der aus der Umgebung angesaugte Luftstrom verdichtet und einer Vorreinigung unterzogen, bei der in einem Adsorptionsschritt Feuchte und langkettige Kohlenwasserstoffmoleküle und dann, mittels Molekularsieb, Kohlendioxid und die übrigen Kohlenwasserstoffe abgetrennt werden. Der so behandelte Luftstrom wird dann in Wärmeaustausch mit den die Doppelsäulen-Rektifikation verlassenden Produktströme, Sauerstoff, Stickstoff und Restgas, gebracht.

Der Wärmeaustausch wird so durchgeführt, dass die komprimierte Luft bis auf ihre Kondensationstemperatur abgekühlt und die Produktströme bis auf Umgebungstemperatur erwärmt werden. Dabei wird das Verfahren häufig so durchgeführt, dass der Stickstoffproduktstrom, nach dem Wärmeaustausch und der dabei erfolgten Erwärmung auf Raumtemperatur, einen erhöhten Druck von ca. 5 - 6 bar besitzt. Dieser Stickstoff kann als Utility für andere Anlagen oder, z.B. nach Entspannung und Abkühlung, zur Vorkühlung der Luft für die Luftzerlegungsanlage verwendet werden.

Der in der Luftzerlegung produzierte Sauerstoff wird anschließend, zusammen mit einem Dampfstrom, zur Umwandlung, auch Vergasung genannt, eines kohlenwasserstoffhaltigen Brennstoffs zu hauptsächlich aus Wasserstoff und Kohlenmonoxid bestehendem Synthesegas verwendet. Als Brennstoff wird häufig Kohle, Koks oder Erdgas verwendet, aber auch flüssige Kohlenwasserstoffe oder Biomasse. Eine Vielzahl von Verfahren und Reaktortypen sind für die jeweilig vorliegenden Brennstoffe entwickelt worden. Einen Überblick über diese Vergasungsverfahren gibt z. B. auch das oben erwähnte Fachbuch Gasification. Grundsätzlich sind alle diese Vergasungsverfahren für die vorliegende Erfindung einsetzbar.

Für die weitere Verwendung des Synthesegases, als Rohstoff für die Produktion von z.B. Methanol, Ammoniak oder Wasserstoff oder als Brenngas, müssen aus ihm Kohlendioxid und Schwefelwasserstoff, zusammenfassend oft als Sauergase bezeichnet, abgetrennt werden. Dies geschieht sehr wirksam mit einem Tieftemperaturabsorptionsverfahren, bei dem tief abgekühltes Methanol als Absorptionsmittel verwendet wird. Das Verfahren ist unter dem Namen Rectisol Prozess seit den 1950-ziger Jahren bekannt. Eine Beschreibung ist z.B. in Ullmann's Encyclopedia of Industrial Chemistry, 6th edition, Vol. 15, S. 399 ff gegeben. Die Sauergase werden dabei in einer Kolonne, im Gegenstrom, vom tiefkalten Methanol ausgewaschen. Beim sogenannten Standard-Rectisol-Prozess werden beide Sauergase, Kohlendioxid und Schwefelwasserstoff, in einer Kolonne ausgewaschen. Das zu waschende Synthesegas tritt am Boden in die Kolonne ein, im unteren Teil der Kolonne wird hauptsächlich Schwefelwasserstoff und dann, im oberen Teil, hauptsächlich Kohlendioxid ausgewaschen. Bei der Regenerierung des Methanols werden die Sauergase als Gasgemisch gewonnen und zur weiteren Behandlung abgeführt. Für den Fall, dass man Kohlendioxid und Schwefelwasserstoff getrennt gewinnen will, wurde das sogenannte selektive Rectisol-Verfahren entwickelt. Dabei durchströmt das zu reinigende Synthesegas zwei nacheinander angeordnete Wasch- bzw. Absorptionskolonnen. In der ersten wird Schwefelwasserstoff, in der zweiten Kohlendioxid abgetrennt. Die Sauergase werden so getrennt gehalten und können anschließend jeweils aus dem beladenen Methanol ausgetrieben werden. Für die vorliegende Erfindung können sowohl das Standard als auch das Selektive Rectisol-Verfahren zum Einsatz kommen. Die Einstellung der für das Verfahren erforderlichen tiefen Temperatur des Methanols erfolgt, indem ein beladener Methanolstrom, der durch die Absorption erwärmt wurde, der Absorptionskolonne entnommen, durch Wärmeaustausch mit einem Kühlmedium gekühlt und dann wieder in die Kolonne eingespeist wird. Als Kühlmedium wird häufig Ammoniak oder Propylen, das jeweils in einer Kompressionskühlanlage entsprechend heruntergekühlt wird, verwendet. EP 2 498 033 A2 offenbart die Kühlung eines in einem Gaswäscheverfahren verwendeten Lösungsmittels durch in einer Anlage zur Luftzerlegung erzeugten flüssigen oder gasförmigen Stickstoff oder Sauerstoff.

EP 2 292 554 A1 offenbart die Herstellung von Ammoniak aus Wasserstoff und Stickstoff umfassendem Synthesegas. Das rohe Synthesegas wird in einem kryogenen Reinigungsabschnitt behandelt und dabei ein gereinigter Synthesegasstrom erhalten. Dem kryogenen Reinigungsabschnitt wird ein flüssiger, stickstoffreicher Strom zugeführt, wobei ein indirekter Wärmetausch zwischen dem Synthesegas und dem stickstoffreichen Strom vorgesehen ist. Dabei wird der stickstoffreiche Strom zumindest teilweise verdampft, um eine Kühlung des kryogenen Reinigungsabschnitts bereitzustellen.

EP 0 556 691 offenbart ein Verfahren zur Vergasung von kohlenstoffhaltigen Rückständen mit Sauerstoff aus einer Luftzerlegungsanlage unter Zusatz von Dampf. Dabei wird durch Schwefelwasserstoff-Wäsche und Konvertierung von Kohlenmonoxid in einer Wassergas-Shift-Reaktion Roh-Wasserstoff sowie Kohlendioxid und Schwefelwasserstoff erzeugt. Ein Teilstrom des Schwefelwasserstoff-freien, hauptsächlich Wasserstoff und Kohlenmonoxid aufweisenden Rohgases wird über eine Entspannungsturbine als Heizgas zur Erzeugung von Hockdruckdampf abgezweigt.

US 2010/018216 offenbart ein Verfahren zur Erzeugung eines oder mehrerer flüssiger Brennstoffe oder chemischer Produkte und von elektrischer Energie, in dem untere anderem eine Luftzerlegungsanlage, eine Synthesegaserzeugung mit Hilfe des bei der Luftzerlegung erzeugten Sauerstoffs sowie ein Gaswäscheverfahren vom Rectisol oder Selexol Typ zur Abtrennung von Schwefelwasserstoff aus dem Synthesegas zum Einsatz kommen.

Das erfindungsgemäße Verfahren zur Synthesegaserzeugung erfordert zur Einstellung der erforderlichen tiefen Prozesstemperaturen einen hohen Aufwand an elektrischer Energie, die für die Komprimierung der Luft und des Kältemittels benötigt wird.
Die Aufgabe der Erfindung ist es daher, eine Variante des Verfahrens zur Verfügung zu stellen, die einen niedrigeren Verbrauch an elektrischer Energie zu ihrem Betrieb aufweist.

### Beschreibung der Erfindung

Die Aufgabe wird durch ein Verfahren gemäß den Merkmalen des Anspruchs 1 und durch eine Anlage gemäß den Merkmalen des Anspruchs 7 gelöst. Weitere vorteilhafte Ausgestaltungen des erfindungsgemäßen Verfahrens und der finden sich in jeweiligen abhängigen Ansprüchen.

Der bei der. Luftzerlegung mittels Tieftemperatur-Doppelsäulen-Rektifikation erzeugte Stickstoffstrom, von ca. 5 - 6 bar und Umgebungstemperatur, fällt zum mehr oder weniger großen Teil als Abfallstrom an, und wird bisher an die Umgebungsluft abgegeben. Dabei wird zwangsläufig die in diesem Strom enthaltene Kompressionsenergie nutzlos verworfen. Die Größe dieses ungenutzten Stickstoffanteils hängt häufig davon ab, ob bzw. wie viel Stickstoff auf dem Gelände der Anlage z.B. zur, nicht zum Verfahren gehörenden, Weiterverarbeitung des Synthesegases verwendet werden kann.

Erfindungsgemäß wird die in diesem Stickstoffstrom enthaltene Kompressionsenergie genutzt, um den Strom durch Entspannung und Leistung von Volumenarbeit soweit abzukühlen, dass er zur Unterstützung bzw. Entlastung der Kompressionskühlanlage zur Kühlung des Absorptionsmittels für die Tieftemperaturabsorption des Sauergases verwendet werden kann. Die Kühlung des Absorptionsmittels, häufig Methanol, kann dabei durch Wärmeaustausch zwischen dem Stickstoffstrom und einem Methanolstrom erfolgen. Der größere Teil der für die Tieftemperaturabsorption erforderlichen Kühlleistung wird von der zur Absorptionsanlage gehörenden Kompressionskälteanlage geliefert. Die Kühlung des Methanolstroms kann entweder in einem Wärmetauscher, durch den Stickstoff- und den Kältemittelstrom der Kompressionskälteanlage, oder durch zwei nacheinander oder parallel angeordnete Wärmetauscher, einer für den Austausch zwischen dem Stickstoff- und dem Methanolstrom und einer für den Austausch zwischen dem Kältemittel und dem Methanolstrom durchgeführt werden. Es ist aber auch möglich, dass ein Wärmeaustausch zwischen dem Stickstoffstrom und dem Kältemittel der Kompressionskälteanlage durchgeführt wird.

### Bevorzugte Ausgestaltungen der Erfindung

Eine bevorzugte Ausgestaltung der Erfindung ist dadurch gekennzeichnet, dass ein Wärmeaustausch zwischen dem Stickstoffstrom vor dessen Durchgang durch die Entspannungsturbine und dem gleichen Strom, nach dessen Wärmeaustauschs mit dem Absorptions- oder mit dem Kältemittel, durchgeführt wird. Der Wärmeaustausch des Stickstoffs mit dem Absorptions- oder mit dem Kältemittel auf einem sehr tiefen Temperatumiveau erfolgt, ist der Stickstoffstrom anschließend immer noch kalt genug zur Kühlung. Die Kälte des Stickstoffstrom wird so im höheren Umfang genutzt.

Eine weitere bevorzugte Ausgestaltung der Erfindung ist dadurch gekennzeichnet, dass der Stickstoffstrom, nach dem Wärmeaustausch mit dem Absorptions- oder dem Kältemittel, durch eine weitere Entspannungsturbine geleitet und dabei weiter abgekühlt und anschließend ein weiteres Mal zur Kühlung des Absorptions- oder des Kältemittels verwendet wird. Auf diese Weise wird die Erwärmung und damit die Volumenausdehnung die der Stickstoffstrom bei der Kühlung des Absorptions- oder des Kältemittels erfährt durch eine weitere Entspannung in einer weiteren Turbine ausgenutzt.

Eine weitere bevorzugte Ausgestaltung der Erfindung ist dadurch gekennzeichnet, dass die bei der Entspannung des Stickstoffstroms mittels der Entspannungsturbine gewonnene Energie für den Antrieb einer Kompressionsturbine zur Kompression des durch die Luftzerlegung erhaltenen Restgasstroms verwendet wird und dann der Restgasstrom durch Wärmeaustausch und Entspannung in einer weiteren Entspannungsturbine gekühlt und dann zur Kühlung durch Wärmeaustausch des Absorptions- oder des Kältemittels verwendet wird. Auf diese Weise wird einerseits der Restgasstrom, der normalerweise an die Umgebung abgegeben wird, genutzt und anderer wird die durch die Entspannungsturbine vom Stickstoffstrom geleistete Volumenarbeit genutzt.

Eine weitere bevorzugte Ausgestaltung der Erfindung ist dadurch gekennzeichnet, dass es sich bei dem verwendeten flüssigen Absorptionsmittel um Methanol handelt. Methanol weist eine sehr gute Absorptionsfähigkeit für die Sauergase auf. Zudem ist die Absorptionsfähigkeit sehr temperaturabhängig, sodass das Methanol auf einfache Weise, durch Erwärmung, regeneriert werden kann.

Eine weitere bevorzugte Ausgestaltung der Erfindung ist dadurch gekennzeichnet, dass die Kühlung des Kältemittels durch Wärmeaustausch mit dem Stickstoff- und, sofern anwendbar, gemäß Anspruch 4, dem Restgasstrom durch einen stromwärts direkt vor der Entspannungsdüse im Kältemittelkreislauf der Kompressionskälteanlage installierten Wärmeaustauscher. Durch diese zusätzliche Kühlung wird das Kältemittel bei seinem Durchgang durch die Entspannungsdüse zu einem geringeren Teil verdampft. Die Menge des im Kältemittelkreislauf umgepumpten Kältemittels kann dadurch verringert werden.

Weiterhin betrifft die Erfindung eine Anlage zur Erzeugung von Synthesegas umfassend folgende Teilanlagen:
- Anlage zur Zerlegung von Luft unter Verwendung einer nach dem Prinzip der kryogenen Rektifikation unter erhöhtem Druck arbeitenden Luftzerlegungsanlage, die geeignet ist einen Strom gasförmigen Sauerstoffs und einen Strom St₁ gasförmigen Stickstoffs erhöhten Drucks und Umgebungstemperatur, sowie einen Restgasstrom zu erzeugen,
- Anlage zur Umwandlung bzw. Vergasung eines kohlenstoffhaltigen Brennstoffs mit einem Vergasungsmittel zu einem hauptsächlich Wasserstoff und Kohlenmonoxid umfassenden Synthesegas, wobei die Teilanlagen Luftzerlegung und Vergasung so verschaltet sind, dass der in der Luftzerlegung erzeugte Sauerstoff dem in der Vergasung verwendeten Vergasungsmittel beigefügt werden kann,
- Anlage zur Abtrennung der Sauergase Kohlendioxid und Schwefelwasserstoff aus dem in der Vergasung erzeugten Rohsynthesegas durch Absorption bei tiefer Temperatur mit einem flüssigen Absorptionsmittel, wie z.B. Methanol, wobei die Anlage mit einer Kompressionskälteanlage ausgestattet ist, wobei
   die Anlage eine Entspannungsturbine, über die der in der Vergasung erzeugte Stickstoffstrom entspannt und dabei abgekühlt werden kann und einen Wärmeaustauscher, für den Wärmeaustausch zwischen diesem entspannten Stickstoffstrom und dem in Teilanlage Sauergasabtrennung verwendeten flüssigen Absorptionsmittel oder mit dem Kältemittel der Kompressionskälteanlage umfasst.

Eine bevorzugte Ausgestaltung der erfindungsgemäßen Anlage ist dadurch gekennzeichnet, dass die Anlage einen zusätzlichen Wärmeaustauscher für den Wärmeaustausch zwischen dem in der Teilanlage Luftzerlegung erzeugten Stickstoffstrom, vor dessen Entspannung, und dem gleichen Strom, nach dessen Entspannung in der Entspannungsturbine und nach dessen Wärmeaustausch mit dem flüssigen Absorptions- oder Kältemittel umfasst. Dieser zusätzliche Wärmeaustauscher ermöglicht die Ausnutzung der noch im Stickstoff enthaltenen Kälte zur Vorkühlung des aus der Luftzerlegung kommenden Stickstoffstroms. Denn, da der Wärmeaustausch zwischen dem entspannten Stickstoffstrom und dem Absorptions- oder mit dem Kältemittel auf einem sehr tiefen Temperaturniveau erfolgt, ist der Stickstoffstrom anschließend immer noch kalt genug zu dieser Vorkühlung. Die Kälte des Stickstoffstrom kann so im höheren Umfang genutzt werden.

Eine weitere bevorzugte Ausgestaltung der erfindungsgemäßen Anlage ist dadurch gekennzeichnet, dass die Anlage eine zweite Turbine umfasst, über die der Stickstoffstrom, nach dessen Entspannung in der ersten Turbine und Wärmeaustausch im Wärmeaustauscher mit dem flüssigen Absorptions- oder dem Kältemittel weiter entspannt werden kann und dadurch, dass der Wärmeaustauscher so ausgebildet ist, dass in ihm der gleichzeitige Wärmeaustausch zwischen dem flüssigen Absorptions- oder dem Kältemittel, dem Stickstoffstrom nach der Entspannung in ersten und dem Stickstoffstrom nach der Entspannung in der zweiten Turbine möglich ist. Durch diese Bauweise der Anlage kann die Erwärmung und damit die Volumenausdehnung die der Stickstoffstrom bei der Kühlung des Absorptions- oder des Kältemittels erfährt durch eine weitere Entspannung in der weiteren Turbine ausgenutzt werden.

Eine weitere bevorzugte Ausgestaltung der erfindungsgemäßen Anlage ist dadurch gekennzeichnet, dass die Anlage zusätzliche eine Kompressionsturbine zur Kompression des Restgasstroms umfasst, die durch die zur Entspannung des Stickstoffstroms dienende Entspannungsturbine angetrieben wird, z.B. indem die Kompressions- und die Entspannungsturbine gemeinsam auf einer Turbinenachse montiert sind, wobei die Anlage weiterhin einen Wärmetauscher zur Kühlung des komprimierten Restgasstroms mit Kühlwasser und eine Entspannungsturbine zur Entspannung des Restgasstroms umfasst und wobei die Anlage weiterhin einen Wärmeaustauscher mit zwei Durchgängen für den Restgasstrom und einem Durchgang für den Stickstoffstrom umfasst und wobei der Wärmetauscher für den Wärmeaustausch zwischen dem Stickstoffstrom und dem Absorptions- oder dem Kältemittel zusätzlich einen Durchgang für den Restgasstrom umfasst. Der Vorteil dieser Ausgestaltung liegt darin, dass die vom Stickstoffstrom, bei seiner Entspannung über die Entspannungsturbine, geleistete Volumenarbeit, unter Nutzung des Restgasstroms, für die Kühlung des Absorptionsmittels genutzt werden kann.

### Ausführungsbeispiele

Weiterbildungen, Vorteile und Anwendungsmöglichkeiten der Erfindung ergeben sich auch aus der nachfolgenden Beschreibung von nicht beschränkenden Ausführungs- und Zahlenbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen die Figuren:
Fig. 1, Blockschema einer Ausführung des erfindungsgemäßen Verfahrens bzw. der erfindungsgemäßen Anlage und dem erfindungsgemäßen Wärmeaustausch zwischen dem entspannten Stickstoffstrom und dem Absorptionsmittelstrom,
Fig. 2, Verfahrensschema einer weiteren Ausführung des erfindungsgemäßen Wärmeaustauschs zwischen dem entspannten Stickstoffstrom und dem Absorptionsmittelstrom,
Fig. 3, Verfahrensschema einer Ausführung des erfindungsgemäßen Wärmeaustauschs zwischen dem entspannten Stickstoffstrom und dem Restgasstrom mit dem Absorptionsmittelstrom,
Fig. 4, Verfahrensschema einer Kompressionskälteanlage zur Kühlung des Absorptionsmittelstroms mit Unterstützung durch den entspannten Stickstoffstrom.

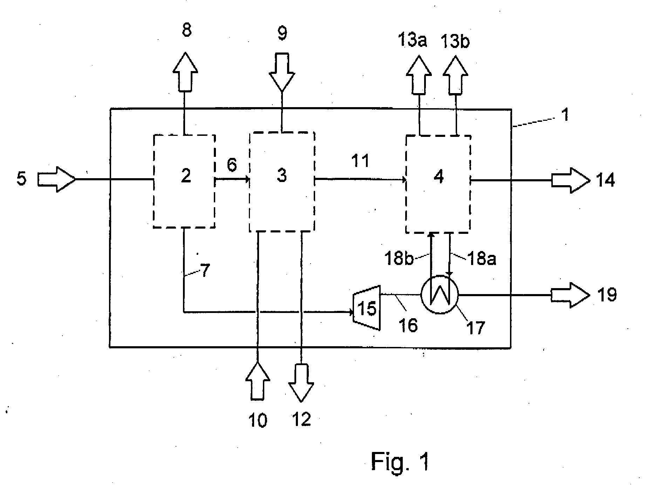

Die Erfindung soll im Folgenden, anhand der Zeichnung erläutert werden. In Fig. 1 umfasst das erfindungsgemäße Verfahren bzw die erfindungsgemäße Anlage 1 umfasst die Verfahrensschritte bzw. Teilanlagen Tieftemperatur-Luftzerlegung 2, Kohlenwasserstoff-Synthesegas-Umwandlung 3 und Tieftemperatur-Absorption 4 mit Kompressionskälteanlage. Luft 5 wird in die Tieftemperatur-Luftzerlegung 2 eingeführt und dort in die Ströme Sauerstoff 6, Stickstoff 7 und Restgas 8 zerlegt. Als Synthesegaserzeugungsverfahren 3 kommt jedes, dem Fachmann bekannte Verfahren in Frage, das ein Synthesegas erzeugt, aus dem, vor der weiteren Verwendung außerhalb des Verfahrens, der Sauergasanteil abgetrennt werden soll. In das Verfahren 3 wird ein kohlenwasserstoffhaltiger Brennstoff 9, Dampf 10 und der Sauerstoff 6 eingeführt und daraus ein mit Sauergas beladenes, hauptsächlich aus Kohlenmonoxid und Wasserstoff bestehendes Synthesegas 11 und ein Reststoff 12. In Abhängigkeit von der Art des verwendeten Synthesegaserzeugungsverfahrens kann es sich bei dem Reststoff 12 beispielsweise um Asche handeln. Das Synthesegas 11 wird in dem Verfahrensschritt Tieftemperatur-Absorption 4 behandelt, wobei ein, in diesem Beispiel, ein Kohlendioxidstrom 13a und ein kohlendioxidhaltiger Schwefelwasserstrom 13b aus dem Synthesegas abgetrennt wird und das von diesen Sauergasströmen befreite Synthesegas 14 zur weiteren Verwendung aus dem Verfahren 1 ausgeleitet wird. Der Stickstoffstrom 7 verlässt mit erhöhtem Druck und mit Umgebungstemperatur die Luftzerlegung 2. In der Entspannungsturbine 15 wird der Stickstoffstrom 7 in einen kalten Stickstoffstrom 16 umgewandelt. In Wärmetauscher 17 wird der Absorptionsmittelstrom 18, aus der Tieftemperatur-Absorption 4, gekühlt, wobei die Kühlung des Absorptionsmittels durch die, hier nicht dargestellte, Kompressionskühlanlage unterstützt wird. Anschließend wird der Stick-stoffstrom, als Strom 19, aus dem Verfahren 1, zur weiteren Behandlung, ausgeleitet. Eine beispielhafte Modelrechnung ergab folgende Parameterwerte:
- Strom 7: 5,0 bar, 25°C, 25 000 Nm3/h
- Turbine 15: Erzeugte elektrische Leistung 1,3 MW
- Strom 16: 1,7 bar, -55°C
- Strom 18 (Methanol): -31°C/-35°C
- Strom 19: 1,7 bar, -38°C

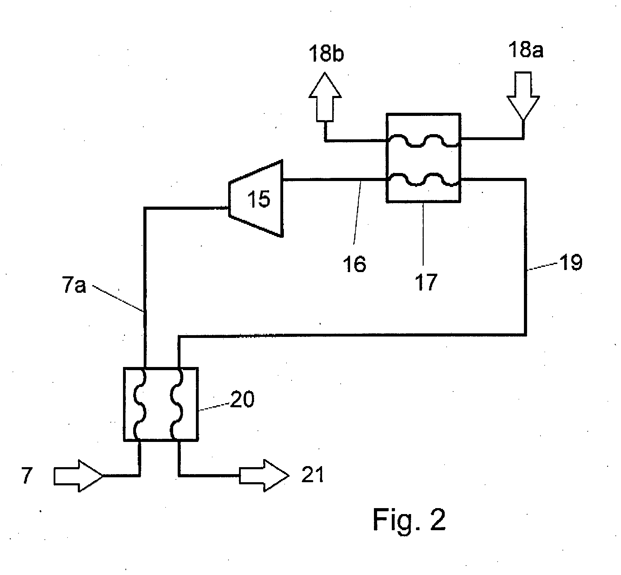

Bei der in Fig. 2 dargestellten Ausgestaltung der Erfindung wird ein Wärmeaustausch zwischen dem aus der Luftzerlegung kommenden Stickstoffstrom 7 und dem Strom 19, d. h. nach dem Wärmeaustausch des Stickstoffs mit dem Absorptionsmittel in Wärmeaustauscher 20 durchgeführt. Eine beispielhafte Modelrechnung ergab folgende Parameterwerte:
- Strom 7: 5,0 bar, 25°C, 25 000 Nm3/h
- Strom 7a: 4,9 bar, -35°C
- Turbine 15: Erzeugte elektrische Leistung 0,36 MW
- Strom 16: 3,4 bar, -55°C
- Strom 18 a/b (Methanol): -31°C/-35°C
- Strom 19: 3,3 bar, -38°C
- Strom 21: 3,2 bar, 22°C

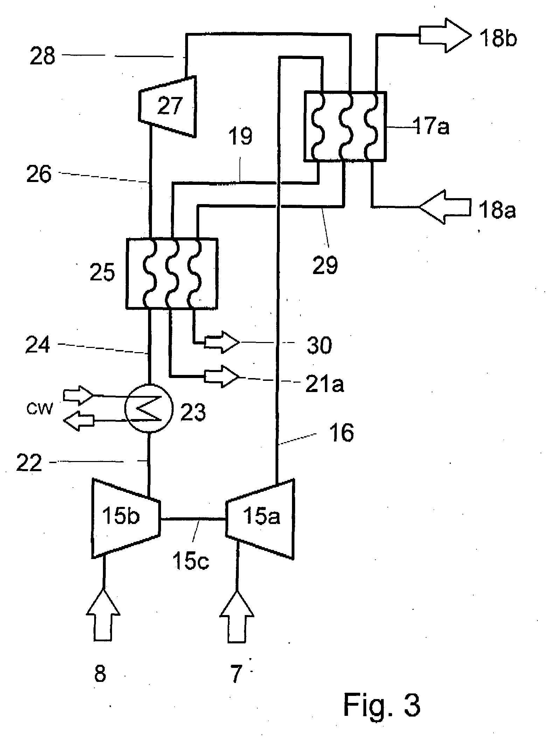

Bei der in Fig. 3 dargestellten Ausgestaltung der Erfindung wird auch der in der Luftzerlegung 2, Fig. 1 erzeugte Restgasstrom 8 und die in der Entspannungsturbine 15 erzeugte Energie zur Kühlung des Absorptionsmittels verwendet. Dazu wird in diesem Beispiel die Entspannungsturbine 15a über eine Welle 15c mit der Kompressionsturbine 15b gekoppelt, d.h. die Kompressionsturbine 15b wird direkt von der Entspannungsturbine 15a angetrieben. Die Kompressionsturbine 15b komprimiert den Restgasstrom 8 zu Strom 22, dieser wird in Wärmeaustauscher 23 mittels Kühlwasser CW und anschließend in Wärmeaustauscher 25 von den aus Wärmeaustauscher 17a zurückfließenden Stickstoff- und Restgasströmen gekühlt. Eine weitere Kühlung des Restgasstroms erfolgt durch Abgabe von Volumenarbeit in Entspannungsturbine 27. Der Restgasstrom 28 wird dann, gemeinsam mit dem Stickstoffstrom 16, in Wärmeaustauscher 17a zur Kühlung des Absorptionsmittelstroms 18 verwendet. Eine beispielhafte Modelrechnung ergab für diese Ausgestaltung folgende Parameterwerte:
- Strom 7: 5,0 bar, 20°C, 25 000 Nm3/h
- Turbine 15a: Erzeugte Leistung 1,2 MW
- Strom 16: 1,5 bar, -55°C
- Strom 18 (Methanol): -31°C/-35°C
- Strom 19: 1,4 bar, -38°C
- Strom 21a: 1,4 bar, -3,5°C
- Strom 8: 1,1 bar, 25°C
- Strom 22: 1,8 bar, 70°C
- Strom 24: 1,8 bar, 25°C
- Strom 26: 1,7 bar, -35°C
- Turbine 27: Erzeugte Leistung 0,4 MW
- Strom 28: 1,2 bar, -55°C
- Strom 29: 1,1 bar, -38°C
- Strom 30: 1,1 bar, -3,5°C

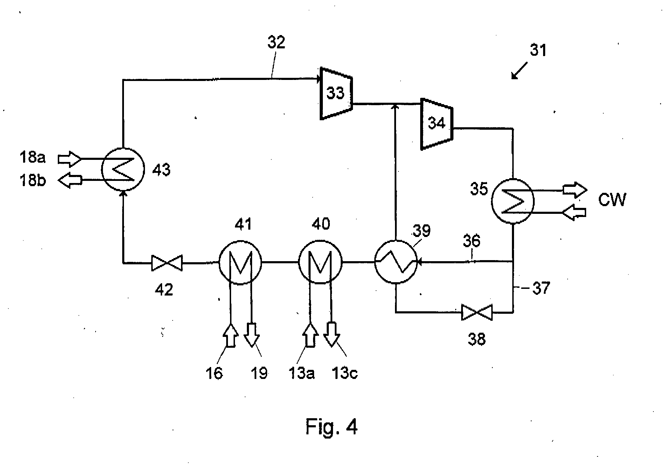

In Fig. 4 ist beispielhaft der Kreislauf 31 des Kühlmittels der zur Tieftemperatur-Absorptionsanlage 4, Fig. 1 gehörenden Kompressionskühlanlage dargestellt, die zur Kühlung des Absorptionsmittels 18 a, b dient. Als Kühlmittel wird häufig Ammoniak verwendet. Der Ammoniakstrom 32 wird in zwei Stufen in den hintereinander geschalteten Verdichter 33 und 34 komprimiert und in Wärmeaustauscher 35 mittels Kühlwasser CW gekühlt und zum Teil kondensiert. Der Ammoniakstrom wird dann in die Ströme 36 und 37 aufgeteilt. Der Strom 37 wird in Ventil 38 entspannt, dabei abgekühlt und zur Kühlung des Stroms 36 in Wärmeaustauscher 39 verwendet und anschließend vor Verdichter 34 wieder in den Hauptstrom zurückgeführt. Der Ammoniakstrom 36 wird, nach der Kühlung in Wärmetauscher 39 in Wärmetauscher 40 durch den, in der Absorptionsanlage 4, Fig. 1 abgetrennten Kohlendioxidstrom 13 a und in Wärmetauscher 41 durch den entspannten und abgekühlten Stickstoffstrom 16 gekühlt. Dann wird der Ammoniakstrom in Ventil 42 entspannt, dabei weiter abgekühlt und dann, in Wärmeaustauscher 43 zur Kühlung des Absorptionsmittels Methanol 18 a, b verwendet.

### Gewerbliche Anwendbarkeit

Die Erfindung liefert eine Möglichkeit bei der Herstellung von Synthesegas und bei dessen Reinigung von Sauergas, den Aufwand an elektrischer Energie zu senken. Die Erfindung ist daher gewerblich anwendbar.

### Bezugszeichenliste

- 1: erfindungsgemäßes Verfahren/Anlage
- 2: Tieftemperatur-Luftzerlegung,
- 3: Kohlenwasserstoff-Synthesegas-Umwandlung
- 4: Tieftemperatur-Adsorption
- 5: Luft
- 6: Sauerstoff
- 7: Stickstoff
- 8: Restgas
- 9: Kohlenwasserstoffhaltiger Brennstoff
- 10: Dampf
- 11: Synthesegas, Sauergase enthaltend
- 12: Reststoff
- 13: Sauergase, a u. c Kohlendioxid, b Schwefelwasserstoff, kohlendioxidhaltig
- 14: Synthesegas, frei von Sauergasen
- 15: Turbine, a Entspannungs-, b Kompressionsturbine, c Welle
- 16: Stickstoff
- 17: Wärmeaustauscher, a Wärmeaustauscher für drei Medien
- 18: Absorptionsmittel
- 19: Stickstoff
- 20: Wärmeaustauscher
- 21: Stickstoff
- 22: Restgas
- 23: Wärmeaustauscher
- 24: Restgas
- 25: Wärmeaustauscher
- 26: Restgas
- 27: Entspannungsturbine
- 28: Restgas
- 29: Restgas
- 30: Restgas
- 31: Kühlmittelkreislauf
- 32: Kühlmittelstrom
- 33: Verdichter
- 34: Verdichter
- 35: Wärmeaustauscher
- 36: Kühlmittelstrom
- 37: Kühlmittelstrom
- 38: Entspannungsventil
- 39: Wärmeaustauscher
- 40: Wärmeaustauscher
- 41: Wärmeaustauscher
- 42: Entspannungsventil
- 43: Wärmeaustauscher

## Patentansprüche

1. Verfahren zur Erzeugung eines hauptsächlich aus Kohlenmonoxid und Wasserstoff bestehenden und von Sauergasen befreiten Synthesegases, ausgehend von einem kohlenwasserstoffhaltigen Brennstoff, sowie Luft und Dampf, wobei durch Tieftemperatur-Zerlegung Luft in einen Sauerstoff-, einen Restgas- und ein Stickstoffstrom zerlegt wird, wobei der Restgas- und der Stickstoffstrom Umgebungstemperatur und der Stickstoffstrom einen erhöhten Druck hat, wobei der kohlenwasserstoffhaltige Brennstoff bei erhöhter Temperatur und erhöhtem Druck mit dem Sauerstoffstrom und dem Dampf vermischt und in ein Synthesegas umgewandelt wird und wobei anschließend daraus, durch Tieftemperatur-Absorption in einer Absorptionskolonne, wobei das Absorptionsmittel mittels einer Kompressionskälteanlage gekühlt wird, Sauergas abgetrennt wird, **dadurch gekennzeichnet, dass** der durch Tieftemperatur-Zerlegung von Luft erzeugte Stickstoffstrom über eine Entspannungsturbine geleitet und dabei abgekühlt und anschließend zur Kühlung des Absorptionsmittels oder des im Kältemittelkreislauf der Kompressionskälteanlage zirkulierenden Kältemittels, verwendet wird.

2. Verfahren gemäß Anspruch 1, **dadurch gekennzeichnet, dass** ein Wärmeaustausch zwischen dem durch Tieftemperatur-Zerlegung von Luft erzeugten Stickstoffstrom, vor dessen Durchgang durch die Entspannungsturbine und dem gleichen Strom, nach dessen Durchgang durch die Entspannungsturbine und nach dessen Wärmeaustauschs mit dem Absorptions- oder mit dem Kältemittel, durchgeführt wird.

3. Verfahren gemäß Anspruch 1, **dadurch gekennzeichnet, dass** der durch Tieftemperatur-Zerlegung von Luft erzeugte Stickstoffstrom, nach dem Wärmeaustausch mit dem Absorptions- oder dem Kältemittel, durch eine weitere Entspannungsturbine geleitet und dabei weiter abgekühlt und anschließend ein weiteres Mal zur Kühlung des Absorptions- oder des Kältemittels verwendet wird.

4. Verfahren gemäß Anspruch 1, **dadurch gekennzeichnet, dass** die bei der Entspannung des Stickstoffstroms mittels der Entspannungsturbine gewonnene Energie für den Antrieb einer Kompressionsturbine zur Kompression des durch die Luftzerlegung erhaltenen Restgasstroms verwendet wird und dann der Restgasstrom durch Wärmeaustausch und Entspannung in einer weiteren Entspannungsturbine gekühlt und dann zur Kühlung des Absorptions- oder des Kältemittels verwendet wird.

5. Verfahren gemäß den Ansprüchen 1 bis 4, **dadurch gekennzeichnet, dass** es sich bei dem verwendeten flüssigen Absorptionsmittel um Methanol handelt.

6. Verfahren gemäß den Ansprüchen 1 bis 5, **dadurch gekennzeichnet, dass** die Kühlung des Kältemittels durch Wärmeaustausch mit dem Stickstoff- und, gemäß Anspruch 4, dem Restgasstrom durch jeweils einen stromwärts vor der Entspannungsdüse (42) im Kältemittelkreislauf der Kompressionskälteanlage installierten Wärmeaustauscher durchgeführt wird.

7. Anlage zur Erzeugung von Synthesegas umfassend folgende Teilanlagen:
a) Anlage zur Zerlegung von Luft unter Verwendung einer nach dem Prinzip der kryogenen Rektifikation unter erhöhtem Druck arbeitenden Luftzerlegungsanlage, die geeignet ist einen Strom gasförmigen Sauerstoffs und einen Strom gasförmigen Stickstoffs erhöhten Drucks und Umgebungstemperatur, sowie einen Restgasstrom zu erzeugen,
b) Anlage zur Umwandlung eines kohlenstoffhaltigen Brennstoffs mit einem Vergasungsmittel zu einem hauptsächlich Wasserstoff und Kohlenmonoxid umfassenden Synthesegas, wobei die Teilanlagen a) und b) so verschaltet sind, dass der in Teilanlage a) erzeugte Sauerstoff dem in Teilanlage b) verwendeten Vergasungsmittel beigefügt werden kann,
c) Anlage zur Abtrennung der Sauergase Kohlendioxid und Schwefelwasserstoff aus dem in Teilanlage b) erzeugten Rohsynthesegas durch Absorption bei tiefer Temperatur mit einem flüssigen Absorptionsmittel, wie z.B. Methanol, wobei die Anlage mit einer Kompressionskälteanlage ausgestattet ist,
**dadurch gekennzeichnet, dass**
die Anlage eine Entspannungsturbine, über die der in a) erzeugte Stickstoffstrom entspannt und dabei abgekühlt werden kann und einen Wärmeaustauscher, für den Wärmeaustausch zwischen diesem entspannten Stickstoffstrom und dem in Teilanlage c) verwendeten flüssigen Absorptionsmittel oder mit dem Kältemittel der Kompressionskälteanlage umfasst.

8. Anlage gemäß Anspruch 7, **dadurch gekennzeichnet, dass** die Anlage einen zusätzlichen Wärmeaustauscher (20) für den Wärmeaustausch zwischen dem in der Teilanlage a) erzeugten Stickstoffstrom (7), vor dessen Entspannung, und dem gleichen Strom (19), nach dessen Entspannung in der Entspannungsturbine und nach dessen Wärmeaustausch (17) mit dem flüssigen Absorptions- oder Kältemittel umfasst.

9. Anlage gemäß eines der vorigen Ansprüche, **dadurch gekennzeichnet, dass** die Anlage eine zweite Turbine umfasst, über die der Stickstoffstrom, nach dessen Entspannung in der ersten Turbine und Wärmeaustausch im Wärmeaustauscher mit dem flüssigen Absorptions- oder dem Kältemittel weiter entspannt werden kann und dadurch, dass dieser Wärmeaustauscher so ausgebildet ist, dass in ihm der gleichzeitige Wärmeaustausch zwischen dem flüssigen Absorptions- oder dem Kältemittel, dem Stickstoffstrom nach der Entspannung in der ersten und dem Stickstoffstrom nach der Entspannung in der zweiten Turbine möglich ist.

10. Anlage gemäß eines der vorigen Ansprüche, **dadurch gekennzeichnet, dass** die Anlage zusätzlich eine Kompressionsturbine zur Kompression des Restgasstroms umfasst, die durch die zur Entspannung des Stickstoffstroms dienende Entspannungsturbine angetrieben wird, z.B. indem die Kompressions- und die Entspannungsturbine gemeinsam auf einer Turbinenachse montiert sind, wobei die Anlage weiterhin einen Wärmetauscher zur Kühlung des komprimierten Restgasstroms mit Kühlwasser und eine Entspannungsturbine zur Entspannung des Restgasstroms umfasst und wobei die Anlage weiterhin einen Wärmeaustauscher mit zwei Durchgängen für den Restgasstrom und einem Durchgang für den Stickstoffstrom umfasst und wobei der Wärmetauscher für den Wärmeaustausch zwischen dem Stickstoffstrom und dem Absorptions- oder dem Kältemittel zusätzlich einen Durchgang für den Restgasstrom umfasst.

## Claims

1. Method for generating a synthesis gas which consists principally of carbon monoxide and hydrogen and has been freed of acid gases, proceeding from a hydrocarbonaceous fuel, and air and steam, wherein low-temperature separation separates air into an oxygen stream, a residual gas stream and a nitrogen stream, wherein the residual gas stream and the nitrogen stream are at ambient temperature and the nitrogen stream is at elevated pressure, wherein the hydrocarbonaceous fuel is mixed with the oxygen stream and the steam at elevated temperature and elevated pressure and is converted into a synthesis gas, and wherein acid gas is subsequently separated therefrom by low-temperature absorption in an absorption column, wherein the absorbent is cooled by means of a compression refrigeration plant, **characterised in that** the nitrogen stream generated by low-temperature separation of air is passed through an expansion turbine and cooled thereby and is then used to cool the absorbent or the coolant circulating in the coolant circuit of the compression refrigeration plant.

2. Method according to claim 1, **characterised in that** heat exchange is carried out between the nitrogen stream generated by low-temperature separation of air before it has passed through the expansion turbine and the same stream after it has passed through the expansion turbine and after it has exchanged heat with the absorbent or with the coolant.

3. Method according to claim 1, **characterised in that** the nitrogen stream generated by low-temperature separation of air, after it has exchanged heat with the absorbent or the coolant, is passed through a further expansion turbine and further cooled thereby and is then used once more for cooling of the absorbent or the coolant.

4. Method according to claim 1, **characterised in that** the energy obtained in the expansion of the nitrogen stream by means of the expansion turbine is used to drive a compression turbine for compression of the residual gas stream obtained by the separation of air and then the residual gas stream is cooled by heat exchange and expansion in a further expansion turbine and then used to cool the absorbent or the coolant.

5. Method according to claims 1 to 4, **characterised in that** the liquid absorbent used is methanol.

6. Method according to claims 1 to 5, **characterised in that** the cooling of the coolant is conducted by heat exchange with the nitrogen stream and, according to claim 4, with the residual gas stream by means of a heat exchanger installed upstream of the expansion nozzle (42) in each case in the coolant circuit of the compression refrigeration plant.

7. Plant for generation of synthesis gas, comprising the following component plants:
a) plant for separation of air using an air separation plant which works according to the principle of cryogenic rectification under elevated pressure, and is suitable for generating a stream of gaseous oxygen and a stream of gaseous nitrogen at elevated pressure and ambient temperature, and a residual gas stream,
b) plant for conversion of a carbonaceous fuel with a gasifying agent to produce a synthesis gas comprising principally hydrogen and carbon monoxide, wherein component plants a) and b) are connected so that the oxygen generated in component plant a) can be added to the gasifying agent used in component plant b),
c) plant for removal of the acid gases carbon dioxide and hydrogen sulfide from the crude synthesis gas generated in component plant b) by absorption at low temperature with a liquid absorbent, for example methanol, wherein the plant is equipped with a compression refrigeration plant,
**characterised in that**
the plant comprises an expansion turbine by means of which the nitrogen stream generated in a) can be expanded and thereby cooled and a heat exchanger for the heat exchange between this expanded nitrogen stream and the liquid absorbent used in component plant c) or with the coolant of the compression refrigeration plant.

8. Plant according to claim 7, **characterised in that** the plant comprises an additional heat exchanger (20) for the heat exchange between the nitrogen stream (7) generated in component plant a) before it has been expanded and the same stream (19) after it has been expanded in the expansion turbine and after it has exchanged heat (17) with the liquid absorbent or coolant.

9. Plant according to any of the preceding claims, **characterised in that** the plant comprises a second turbine by means of which the nitrogen stream, after it has expanded in the first turbine and exchanged heat in the heat exchanger with the liquid absorbent or the coolant, can be expanded further, and **in that** this heat exchanger is designed so that in it the simultaneous heat exchange between the liquid absorbent or the coolant, the nitrogen stream after it has expanded in the first turbine and the nitrogen stream after it has expanded in the second turbine, is possible.

10. Plant according to any of the preceding claims, **characterised in that** the plant additionally comprises a compression turbine for compression of the residual gas stream, which is driven by the expansion turbine that serves to expand the nitrogen stream, for example **in that** the compression turbine and the expansion turbine are both mounted on a turbine axis, wherein the plant further comprises a heat exchanger for cooling the compressed residual gas stream with cooling water and an expansion turbine for expansion of the residual gas stream, and wherein the plant further comprises a heat exchanger having two passages for the residual gas stream and one passage for the nitrogen stream, wherein the heat exchanger for the heat exchange between the nitrogen stream and the absorbent or the coolant additionally comprises a passage for the residual gas stream.

## Revendications

1. Procédé de production d'un gaz de synthèse constitué principalement de monoxyde de carbone et d'hydrogène et débarrassé de gaz acides, à partir d'un combustible contenant des hydrocarbures, ainsi que d'air et de vapeur, dans lequel de l'air est fractionné par fractionnement à basse température en un courant d'oxygène, un courant gazeux résiduel et un courant d'azote, dans lequel le courant gazeux résiduel et le courant d'azote sont à température ambiante et le courant d'azote présente une pression accrue, dans lequel le combustible contenant des hydrocarbures est mélangé au courant d'oxygène et à la vapeur à une température accrue et à une pression accrue et est transformé en un gaz de synthèse et dans lequel du gaz acide est séparé ensuite à partir de là par absorption à basse température dans une colonne d'absorption, l'agent absorbant étant refroidi au moyen d'une installation frigorifique à compression, **caractérisé en ce que** le courant d'azote produit par fractionnement à basse température de l'air est conduit par l'intermédiaire d'une turbine de détente et ce faisant est refroidi et est ensuite utilisé pour refroidir l'agent absorbant ou l'agent frigorifique circulant dans le circuit d'agent frigorifique de l'installation frigorifique à compression.

2. Procédé selon la revendication 1, **caractérisé en ce qu'**un échange de chaleur est réalisé entre le courant d'azote produit par fractionnement à basse température de l'air, avant son passage à travers la turbine de détente, et le même courant, après son passage à travers la turbine de détente et après son échange de chaleur avec l'agent absorbant ou avec l'agent frigorifique.

3. Procédé selon la revendication 1, **caractérisé en ce que** le courant d'azote produit par fractionnement à basse température de l'air est conduit, après l'échange de chaleur avec l'agent absorbant ou avec l'agent frigorifique, à travers une autre turbine de détente et ce faisant est encore refroidi et est ensuite utilisé une nouvelle fois pour refroidir l'agent absorbant ou l'agent frigorifique.

4. Procédé selon la revendication 1, **caractérisé en ce que** l'énergie obtenue lors de la détente du courant d'azote au moyen de la turbine de détente est utilisée pour entraîner une turbine à compression en vue de la compression du courant gazeux résiduel obtenu par le fractionnement d'air et le courant gazeux résiduel est ensuite refroidi par échange de chaleur et détente dans une autre turbine de détente et est ensuite utilisé pour refroidir l'agent absorbant ou l'agent frigorifique.

5. Procédé selon les revendications 1 à 4, **caractérisé en ce que** l'agent absorbant liquide utilisé est du méthanol.

6. Procédé selon les revendications 1 à 5, **caractérisé en ce que** le refroidissement de l'agent frigorifique par échange de chaleur avec le courant d'azote et, selon la revendication 4, avec le courant gazeux résiduel s'effectue à travers à chaque fois un échangeur thermique installé dans le sens du courant avant la buse de détente (42) dans le circuit d'agent frigorifique de l'installation frigorifique à compression.

7. Installation de production de gaz de synthèse comprenant les parties d'installation suivantes :
a) installation pour fractionner de l'air en utilisant une installation de fractionnement d'air travaillant selon le principe de la rectification cryogénique sous pression accrue, qui est conçue pour produire un courant d'oxygène gazeux et un courant d'azote gazeux à pression accrue et à température ambiante ainsi qu'un courant gazeux résiduel,
b) installation pour transformer un combustible contenant des hydrocarbures avec un agent gazéifiant en un gaz de synthèse comprenant principalement de l'hydrogène et du monoxyde de carbone, dans laquelle les parties d'installation a) et b) sont branchées de telle sorte que l'oxygène produit dans la partie d'installation a) peut être ajouté à l'agent gazéifiant utilisé dans la partie d'installation b),
c) installation pour séparer des gaz acides dioxyde de carbone et hydrogène sulfuré à partir du gaz de synthèse brut, produit dans la partie d'installation b), par absorption à basse température avec un agent absorbant liquide, par exemple du méthanol, dans laquelle l'installation est équipée d'une installation frigorifique à compression,
**caractérisée en ce que**
l'installation comprend une turbine de détente, par l'intermédiaire de laquelle le courant d'azote produit dans a) peut être détendu et ce faisant refroidi, et un échangeur thermique, en vue de l'échange de chaleur entre ce courant d'azote détendu et l'agent absorbant liquide utilisé dans la partie d'installation c) ou avec l'agent frigorifique de l'installation frigorifique à compression,

8. Installation selon la revendication 7, **caractérisée en ce que** l'installation comprend un échangeur thermique (20) supplémentaire pour l'échange de chaleur entre le courant d'azote (7) produit dans la partie d'installation a), avant sa détente, et le même courant (19), après sa détente dans la turbine de détente et après son échange de chaleur (17) avec l'agent absorbant ou frigorifique liquide.

9. Installation selon l'une quelconque des revendications précédentes, **caractérisée en ce que** l'installation comprend une seconde turbine, par l'intermédiaire de laquelle le courant d'azote, après sa détente dans la première turbine et après son échange de chaleur dans l'échangeur thermique avec l'agent absorbant ou frigorifique liquide peut être encore détendu et **caractérisée en ce que** cet échangeur thermique est réalisé de telle sorte qu'il est possible de réaliser en son sein l'échange de chaleur simultané entre l'agent absorbant ou frigorifique liquide, le courant d'azote après la détente dans la première turbine et le courant d'azote après la détente dans la seconde turbine.

10. Installation selon l'une quelconque des revendications précédentes, **caractérisée en ce que** l'installation comprend en plus une turbine à compression pour la compression du courant gazeux résiduel, qui est entraînée par la turbine de détente servant à la détente du courant d'azote, par exemple du fait que la turbine à compression et la turbine de détente sont montées ensemble sur un axe de turbine, dans laquelle l'installation comprend en outre un échangeur thermique pour refroidir le courant gazeux résiduel comprimé avec de l'eau frigorifique et une turbine de détente pour détendre le courant gazeux résiduel et dans laquelle l'installation comprend en outre un échangeur thermique avec deux passages pour le courant gazeux résiduel et un passage pour le courant d'azote et dans laquelle l'échangeur thermique pour l'échange de chaleur entre le courant d'azote et l'agent absorbant ou l'agent frigorifique comprend en plus un passage pour le courant gazeux résiduel.
